# EUROPÄISCHE PATENTSCHRIFT

(11) **EP 1 047 918 B1**
(45) Veröffentlichungstag und Bekanntmachung des Hinweises auf die Patenterteilung: **21.04.2004**
(21) Anmeldenummer: 99922054.4
(22) Anmeldetag: 22.03.1999
(51) Int. Cl.: G01D 5/36, G01D 5/245

(54) **VERFAHREN ZUR ERZEUGUNG EINES TRÄGERFREQUENZ-MODULIERTEN SIGNALS**
METHOD OF PRODUCING A CARRIER FREQUENCY MODULATED SIGNAL
PROCEDE DE PRODUCTION D'UN SIGNAL A MODULATION DE LA FREQUENCE PORTEUSE

(30) Priorität: 16.11.1998 DE 19852665
(43) Veröffentlichungstag der Anmeldung: 02.11.2000
(73) Patentinhaber: CORRSYS-DATRON Sensorsysteme GmbH, 35578 Wetzlar (DE)
(72) Erfinder: SCHNEIDER, Eckart, D-85604 Zorneding (DE); SCHÄFER, Roland, D-39625 Rechtenbach (DE); STAMER, Jan, D-35579 Wetzlar (Steindorf) (DE)
(74) Vertreter: Stamer, Harald
(86) Internationale Anmeldenummer: PCT/DE1999/000813
(87) Internationale Veröffentlichungsnummer: WO 2000/029816

(56) Entgegenhaltungen:
- EP-A- 0 501 453
- EP-A- 0 591 832
- DE-A- 2 330 940

## Beschreibung

Die Erfindung betrifft ein Verfahren zur Erzeugung eines trägerfrequenz-modulierten Signals für die Auswertung von n > 2 durch Abbildung einer strukturierten Oberfläche auf ein Ortsfrequenzfilter erzeugten, zueinander phasenverschobenen fotoelektrischen Meßsignalen.

Verfahren, bei denen durch Abbildung einer strukturierten Oberfläche auf ein Ortsfrequenzfilter Meßsignale erzeugt werden, sind bekannt. Zur Abbildung dienen üblicherweise optische Linsensysteme. Die Struktur der Oberfläche kann regelmäßig oder auch stochastisch sein. Das Ortsfrequenzfilter besteht aus einer regelmäßigen Gitterstruktur in Gestalt eines Amplitudengitters oder eines Phasengitters. Die durch das Ortsfrequenzfilter hindurchgehenden Lichtflüsse werden üblicherweise durch eine Feldlinse auf einen fotoelektrischen Empfänger abgebildet. Es ist jedoch auch bekannt, die Strukturelemente des Ortsfrequenzfilters als fotoelektrische Empfängerflächen auszubilden, so daß direkt in der Ebene des Ortsfrequenzfilters gemessen wird.

Bei einer Bewegung der strukturierten Oberfläche relativ zur Struktur des Ortsfrequenzfilters entstehen wechselnde Signalamplituden an den fotoelektrischen Empfängern. Die Bewegung kann parallel zur Ebene des Ortsfrequenzfilters erfolgen. Die Signaländerung am fotoelektrischen Empfänger ist dann proportional der Bewegungstrecke oder der Bewegungsgeschwindigkeit der abgebildeten Oberfläche. Systeme mit regelmäßiger Oberflächenstruktur, die nach diesem System arbeiten, sind als Schrittgeber für Linear- oder Winkelbewegungen bekannt. Systeme mit stochastischer Oberflächenstruktur sind auch als korrelations-optische Weg- und Geschwindigkeits-Meßsysteme bekannt.

Die Bewegung kann jedoch auch senkrecht zur Ebene des Ortsfrequenzfilters erfolgen, wobei die Signaländerung von der Güte der Abbildung auf dem Ortsfrequenzfilter abhängt. Bei Scharfabbildung korreliert die Ortsfrequenz der abgebildeten Oberfläche optimal mit der Ortsfrequenz des Filters.

Ein Problem optisch modulierter Meßverfahren besteht allgemein in hohen Gleichlichtanteilen im Verhältnis zum modulierten Lichtanteil. Es ist bekannt, zur Gleichlichtunterdrückung zwei um 180° zueinander phasenverschobene Signale zu erzeugen und diese einander zu überlagern, so daß sich die dem Gleichlicht entsprechenden Signalanteile aufheben.

Bei einem Amplitudengitter als Ortsfrequenzfilter können unterschiedliche Filterbereiche vorgesehen werden, in denen die Gitterstrukturen zueinander um 180° phasenversetzt sind. Bei Phasengittern können z.B. prismenförmige Gitterstrukturen gewählt werden, bei denen die an den beiden Prismenflanken gebeugten Lichtflüsse geometrisch getrennt und zueinander um 180° phasenverschoben sind. Bei fotoempfindlichen Ortsfrequenzfilter-Strukturen können abwechselnd aufeinander folgende Empfängerstreifen zusammengeschaltet und die Signale elektronisch um 180° zueinander phasenverschoben werden.

Ein weiteres Problem solcher Meßsysteme ist die Richtungserkennung für die Bewegung der strukturierten Oberfläche relativ zu den Strukturen des Ortsfrequenzfilters. Hierzu ist es bekannt, z.B. zwei um 90° zueinander phasenverschobene Meßsignale zu erzeugen, die ein elektrisches Drehfeld definieren.

Bei Amplitudengittem als Ortsfrequenzfilter können dazu wiederum unterschiedliche Filterbereiche vorgesehen werden, in denen die Gitterstrukturen um 90° phasenversetzt sind. Bei Phasengittern können z.B. prismenförmige Gitterstrukturen mit mehr als zwei unterschiedlich zueinander geneigten Flanken vorgesehen werden. Den unterschiedlichen Lichtflüssen werden jeweils getrennte fotoelektrische Empfänger zugeordnet. Bei Bewegung der strukturierten Oberfläche senkrecht zur Struktur des Ortsfrequenzfilters werden die Lichtflüsse moduliert. Aus dem Vergleich der Modulationsphasen kann die Bewegungsrichtung abgeleitet werden.

Bei schachbrettartiger oder pyramidenförmiger Struktur des Ortsfrequenzfilters können modulierte Lichtflüsse für zwei Koordinatenrichtungen der Bewegung erzeugt und mit geeignet angeordneten fotoelektrischen Empfängern gemessen werden.

Die auf die genannten fotoelektrischen Empfänger abgebildeten Lichtflüsse stellen ein Bild der Pupille des die strukturierte Oberfläche abbildenden Systems dar. Es ist bekannt, jedem Pupillenbild z.B. zwei getrennte Empfänger zuzuordnen, so daß diese jeweils Lichtflüsse empfangen, die durch unterschiedliche Pupillenbereiche hindurchgegangen sind. Durch geeignete Auswertung der den unterschiedlichen Pupillenbereichen zugeordneten ortsfrequenzgefilterten Signale kann die Lage der Schärfenebene des Bildes der Oberfläche relativ zur Ebene des Ortsfrequenzfilters bestimmt werden. Daraus läßt sich dann auch die Entfernung der Oberfläche vom abbildenden System ableiten.

Allen bisher genannten Systemen haftet der Nachteil an, daß bei langsamen Bewegungen die Signaimodulation immer schlechter wird und im Stillstand kein Meßsignal mehr gewonnen werden kann. Zur Lösung dieses Problems ist es bekannt, das Ortsfrequenzfilter mit einer bekannten Geschwindigkeit in einer Richtung oder periodisch in Schwingungen zu bewegen, und damit das eigentliche Meßsignal zu modulieren. Dieses als Trägerfrequenz-Modulation bekannte Verfahren erlaubt z.B. eine Signalauswertung durch phasenempfindliche Gleichrichtung mit der Trägerfrequenz als Referenz.

Besonders vorteilhaft ist dieses Verfahren bei der Auswertung der Signale für die Scharfeinstellung der abgebildeten Oberfläche auf das Ortsfrequenzfilter. Die trägerfrequenz-modulierten Meßsignale der den unterschiedlichen Pupillenbereichen zugeordneten fotoelektrischen Empfänger haben nur bei Scharfabbildung dieselbe Phase relativ zur Trägerfrequenz, so daß entweder die Übereinstimmung der trägerfrequenz-modulierten Meßsignale oder die Übereinstimmung der Phasen ein sehr empfindliches Einstellkriterium gibt.

Bei einem auf einer Kreisscheibe angeordneten Ortsfrequenzfilter kann die Bewegung durch Rotation erfolgen. Wegen der radial nach außen gröber werdenden Gitterkonstante ergeben sich im Meßfeld jedoch unterschiedliche Trägerfrequenz-Modulationen, die die Signalauswertung erschweren. Eine lineare Bewegung in einer Richtung läßt sich im allgemeinen nur über eine sehr begrenzte Länge realisieren. Bei einer Anordnung des Ortsfrequenzfilters auf der Mantelfläche einer rotierenden Trommel ist das Ortsfrequenzfilter gekrümmt, so daß keine Scharfabbildung über die gesamte Filterfläche möglich ist.

In der Praxis wird daher eine Schwingbewegung bevorzugt. Das Ortsfrequenzfilter kann dazu z.B. an Piezobiegem aufgehängt sein oder von einem geeigneten Linearantrieb hin- und herbewegt werden (DE 23 30 940 C2). Der Nachteil dieser Anordnung liegt in der Signalauswertung, da in Abhängigkeit von der Lage der Strukturen auf der abgebildeten Oberfläche relativ zum Schwingweg des Ortsfrequenzfilters bei einer Schwingweite von ± einer halben Gitterkonstante die Trägerfrequenz-Modulation sowohl mit der Grundwelle als auch mit der ersten Oberwelle der Trägerfrequenz erfolgt. Die phasenempfindliche Gleichrichtung muß daher in Bezug auf die Trägerfrequenz und die dazu doppelte Frequenz durchgeführt werden (DE 27 36 583 C2). Eine weitere Schwierigkeit entsteht bei Meßanordnungen, die gleichzeitig nach zwei Koordinatenrichtungen messen. Hier muß die Schwingbewegung unter 45° zu den Koordinatenachsen ausgeführt werden, um gleiche Trägerfrequenz-Modulation für die beiden Meßrichtungen zu erhalten.

Eine zusammenfassende Darstellung ist aus dem Aufsatz "New developments in optical grating technology for machine vision and industrial sensors", von R. Schaefer, J. Schwab, N. Lauinger, in Proc.SPIE, Vol. 3208, pp. 428 - 436, (October 1997) zu entnehmen.

Ein grundsätzlicher Nachteil der bekannten Methoden der Trägerfrequenz-Modulation besteht darin, daß die Geschwindigkeit der Bewegung des Ortsfrequenzfilters aufgrund seiner Masse , des Energiebedarfs und der mechanischen Ausführungsform begrenzt ist. Dies ist von entscheidender Bedeutung, da aufgrund des als Shannen-Kriterium bekannten Theorems nur die halbe Bewegungsgeschwindigkeit der zu messenden strukturierten Oberfläche gegenüber der Modulationsgeschwindigkeit fehlerlos auswertbar ist. Dadurch sind also auch Grenzen für die meßbare Geschwindigkeit der Oberfläche gegeben.

Hinzu kommen Störeinwirkungen auf die bewegten Elemente durch Beschleunigungen von außen und Vibrationen im Gesamtsystem durch die Bewegung von Massen.

Der Erfindung lag daher die Aufgabe zugrunde, ein Verfahren für eine Trägerfrequenz-Modulation von ortsfrequenzgefilterten Meßsignalen anzugeben, das ohne mechanisch bewegte Elemente auskommt, das im Vergleich zu den zu messenden Signaländerungen beliebig hohe Modulationsfrequenzen zuläßt und bei allen vorgenannten Meßanordnungen einsetzbar ist, in denen mehr als zwei in vorgegebener Phasenbeziehung zueinander stehende Meßsignale erzeugt werden.

Diese Aufgabe wird bei einem Verfahren der eingangs genannten Art erfindungsgemäß dadurch gelöst, daß die Amplituden der Meßsignale in einem vorgegebenen Abfragezyklus mit einer konstanten Taktrate seriell abgefragt werden und durch Filterung aus der Signalfolge ein sinusförmiges Signal gebildet wird, dessen Trägerfrequenz durch die Zeit für einen Abfragezyklus bestimmt ist. Dabei soll die Taktrate größer als die doppelte Geschwindigkeit der Amplitudenänderung im abgefragten Meßsignal sein.

Bei n zueinander um je 360°/n phasenverschobenen Meßsignalen erfolgt der Abfragezyklus zweckmäßigerweise nach dem Muster 1, 2, 3, ... n, 1, 2, 3, ... n, ...und simuliert damit eine Linearbewegung in einer Richtung. Ein anderer Abfragezyklus kann nach dem Muster 1, 2 , 3, ... n, n-1, ... 2, 1, 2, ... erfolgen und simuliert damit eine Schwingbewegung. Vorzugsweise wird parallel zum ersten Abfragezyklus ein zweiter, bei fortlaufender Numerierung 1, ... , n der Meßsignale um ein Meßsignal verschobener Abfragezyklus durchgeführt und daraus ein in der Phase um 360°/n verschobenes zweites Signal gebildet. Mit Vorteil werden getrennten Pupillenbereichen der Abbildung je n zueinander um 360°/n phasenverschobene Meßsignale zugeordnet, in einem Abfragezyklus parallel die den jeweiligen Pupillenbereichen zugeordneten Meßsignale abgefragt und aus den so erhaltenen Signalfolgen für jeden Pupillenbereich ein Signal gebildet.

Bei den herkömmlichen Verfahren der Trägerfrequenz-Modulation wird der zeitliche Verlauf jedes einzelnen Meßsignals moduliert. Bei üblicherweise vier je um 90° gegeneinander phasenverschobenen Meßsignalen liegen also vier trägerfrequenz-modulierte Meßsignale vor. Erfindungsgemäß werden die Amplituden der vier Meßsignale quasi in einer Momentaufnahme in konstantem zeitlichen Abstand nacheinander betrachtet. Die Abfrage muß so schnell erfolgen, daß über die Zeitdauer des Abfragezyklus die Amplituden an den vier Empfängern als statisch angesehen werden können. Die vier zeitlich aufeinander folgenden Amplitudenwerte dienen als Stützstellen für die Rekonstruktion eines sinusförmigen Signals. Eine solche Rekonstruktion ist an sich bekannt und kann z.B. durch eine geeignete Tiefpaßfilterung erzeugt werden. Aus der Signaltheorie ist bekannt, daß für eine eindeutige Sinuskurve mehr als zwei Stützstellen benötigt werden. In der Praxis folgt daraus, daß mindestens drei Meßsignale mit fester Phasenbeziehung erforderlich sind. Da jeweils mit konstanter Taktrate abgefragt wird, ergibt sich allein daraus ein Trägerfrequenz-Signal mit einer Frequenz entsprechend der Dauer eines Abfragezyklus und einer Phase, die durch den Abfragetakt bestimmt ist. Die Trägerfrequenz kann über die Abfragegeschwindigkeit ersichtlich allen Meßanforderungen auf einfache Weise angepaßt werden.

Solange keine Relativbewegung zwischen dem Bild der strukturierten Oberfläche und dem Ortsfrequenzfilter vorliegt, haben die Meßsignale statische Werte. Durch die Abfrage wird jedoch eine Sinuswelle erzeugt, deren Frequenz gleich der Tägerfrequenz ist und deren Phase sich aus dem Verhältnis der Amplitudenwerte zueinander ergibt. Sobald sich das Bild verschiebt, werden beim nächsten Abfragezyklus veränderte Amplitudenwerte erhalten, die nach Filterung wieder ein sinusförmiges Signal mit der Trägerfrequenz ergeben, dessen Phase aber proportional zur Bildverschiebung gewandert ist. Durch phasenempfindliche Gleichrichtung mit der Trägerfrequenz als Referenz läßt sich die Phasenverschiebung messen und damit der Verschiebeweg der abgebildeten Oberfläche in an sich bekannter Weise bestimmen. Wird parallel dazu ein zweiter, um ein Meßsignal verschobener Abfragezyklus benutzt, so erhält man zwei um 90° phasenverschobene Signale, also ein Drehfeld, das auch die Richtungsinformation enthält.

Bei dem Abfragezyklus, der eine Trägerfrequenz-Modulation entsprechend einer Schwingbewegung um +/- eine halbe Gitterperiode simuliert, entsteht ein Signalverlauf, der bei Relativbewegung des Bildes der strukturierten Oberfläche zwischen der Grundwelle der Trägerfrequenz und der ersten Oberwelle wechselt. In diesem Fall genügt ein einziger Signal-Ausgang, um ein Drehfeld zu erzeugen, wenn mit dem Abfragezyklus getrennt nach Grund- und Oberwelle phasenempfindlich gleichgerichtet wird.

Ein weiterer Vorteil des erfindungsgemäßen Verfahrens ist darin zu sehen, daß auch bei Meßanordnungen für zwei Koordinatenrichtungen nun problemlos in einer Bildebene mit aufeinander senkrecht stehenden Gitterstrukturen eine trägerfrequenz-modulierte Signalauswertung möglich ist.

Für die Abstandsmessung nach dem beschriebenen Pupillenteilungsverfahren werden jeweils z.B. alle linken und alle rechten Pupillenhälften zu einem Abfragezyklus zusammengefaßt und entsprechend gleichartig weiterverarbeitet. In diesem Fall fällt die phasenempfindliche Gleichrichtung weg. Aus den durch den Abfragezyklus gewonnenen Signalen erhält man für jede Pupillenhälfte eine sinusförmige Trägerfrequenz, die sich je nach Entfernungsdifferenz von der Fokusebene in ihrer Phasenlage unterscheidet.

Die Erfindung wird nachfolgend anhand von schematischen Darstellungen näher beschrieben. Dabei zeigen:
- Fig. 1: ein Amplitudengitter als Ortsfrequenzfilter mit vier Feldern
- Fig. 2: ein Phasengitter als Ortsfrequenzfilter mit vier Flanken
- Fig. 3: eine Auswerteschaltung
- Fig. 4a-i: eine trägerfrequenz-modulierte Signalfolge bei Linear-Abtastung
- Fig. 5a-i: eine trägerfrequenz-modulierte Signalfolge bei Schwing-Abtastung

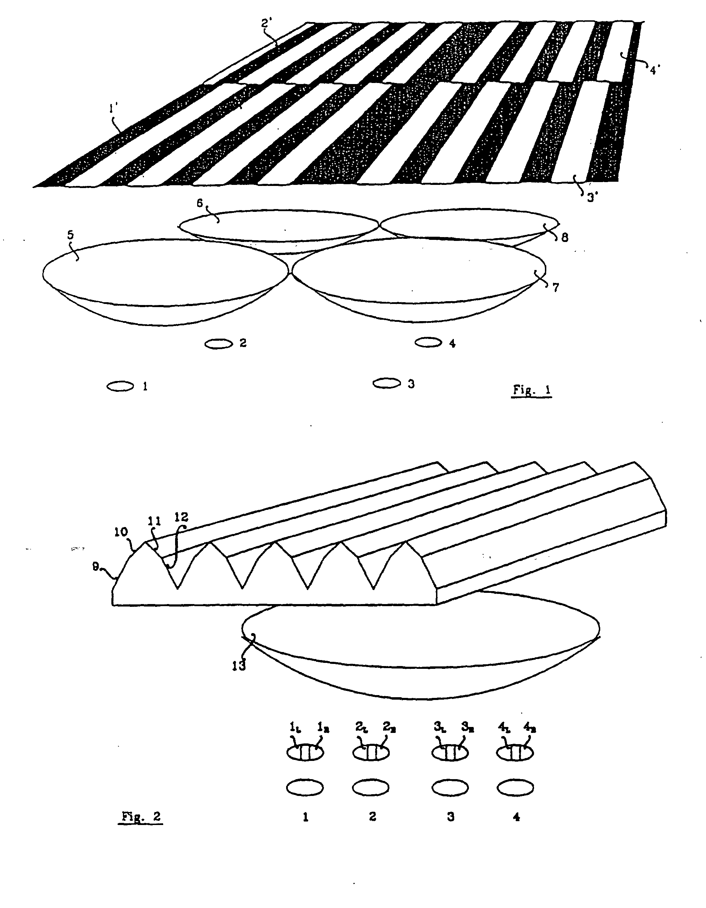

Bei dem in Fig. 1 dargestellten Amplitudengitter sind die Gitterteilungen in den vier Feldern 1', 2', 3' ,4' jeweils um 90° gegeneinander versetzt. Jedem der Felder sind Feldlinsen 5, 6, 7, 8 nachgeordnet, die die ortsfrequenzgefilterten Lichtflüsse der einzelnen Felder auf fotoelektrische Empfänger 1, 2, 3, 4 leiten. Eine solche Anordnung ist an sich bekannt.

Bei dem in Fig. 2 dargestellten Phasengitter besitzen die Prismenstege vier unterschiedlich geneigte Flanken 9, 10, 11, 12. Hier ist dem Ortsfrequenzfilter eine einzige Feldlinse 13 nachgeordnet, die die an gleichen Flanken gebeugten Lichtflüsse auf die fotoelektrischen Empfänger 1, 2, 3, 4 leitet, die hier in einer Reihe nebeneinander liegend angeordnet werden können.

Für eine Abstandsmessung nach dem Pupillenteilungsverfahren können die Empfänger entsprechend der alternativ dargestellten Anordnung jeweils in Empfängerpaare 1_{L} , 1_{R} ; 2_{L} , 2_{R} ; 3_{L} , 3_{R} ; 4_{L} , 4_{R} aufgeteilt werden. Auch solche Anordnungen sind an sich bekannt.

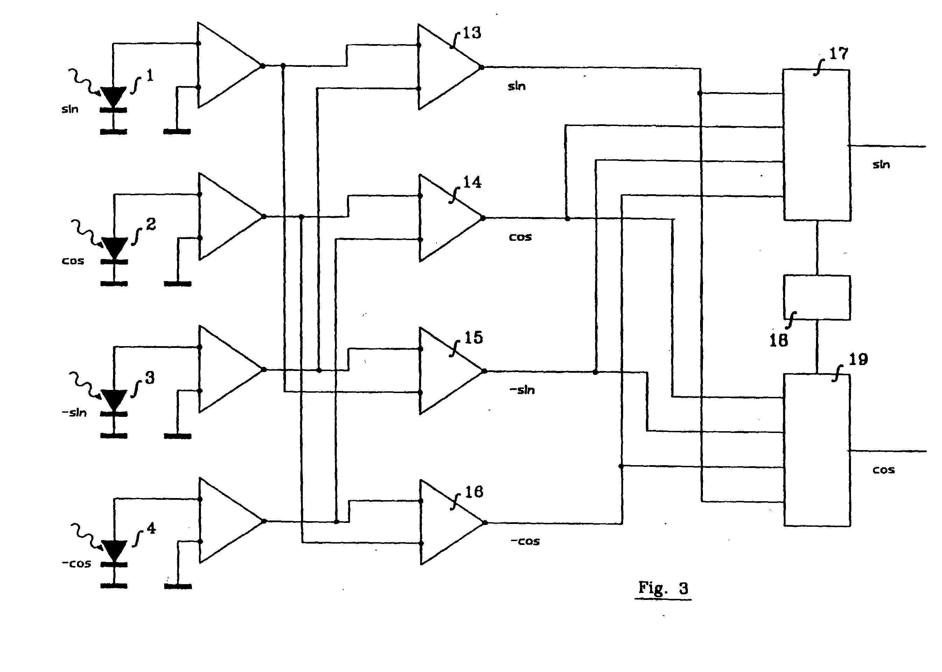

Die in Fig. 3 dargestellte Auswerteschaltung zeigt die fotoelektrischen Empfänger 1, 2, 3, 4. Die Bezeichnungen sin, cos, -sin und -cos zeigen an, daß die Meßsignale an diesen Empfänger zueinander um je 90° phasenverschoben sind, da sie die Lichtflüsse aus den unterschiedlichen Ortfrequenzfilterbereich empfangen. Die Meßsignale werden verstärkt und Differenzverstärkem 13, 14, 15, 16 zugeführt. An den Signaleingängen liegen jeweils die um 180° zueinander phasenverschobenen Meßsignale, so daß hier die Gteichtichtunterdrückung geschieht.

Die Ausgangssignale der Differenzverstärker werden einer Abfrage- und Filtereinrichtung 17 zugeführt, die über einen Taktgeber 18 gesteuert wird. Am Ausgang der Abfrage- und Filtereinrichtung 17 erscheinen die trägerfrequenz-modulierten Signale. In einer Abfrage- und Filtereinrichtung 19, die ebenfalls von dem Taktgeber 18 gesteuert wird, kann parallel ein um ein Meßsignal in der Abfrage verschobener Abfragezyklus ausgeführt werden. Die beiden Ausgangssignale sind dann um 90° zueinander phasenverschoben, wie durch die Bezeichnungen sin und cos angedeutet ist und können in bekannter Weise zur Bestimmung der Bewegungsrichtung ausgewertet werden. Die ebenfalls bekannten Mittel zur phasenempfindlichen Gleichrichtung und Bestimmung des Verschiebeweges sind nicht weiter dargestellt.

Bei einer Auswertung nach dem Verfahren der Pupillenteilung werden getrennte Auswerteschaltungen für die den linken bzw. rechten Pupillenbereichen zugeordneten Empfängergruppen benötigt. Die Entfernung kann direkt aus der Phasendifferenz der beiden am Ausgang anstehenden Sinus-Signale ermittelt werden.

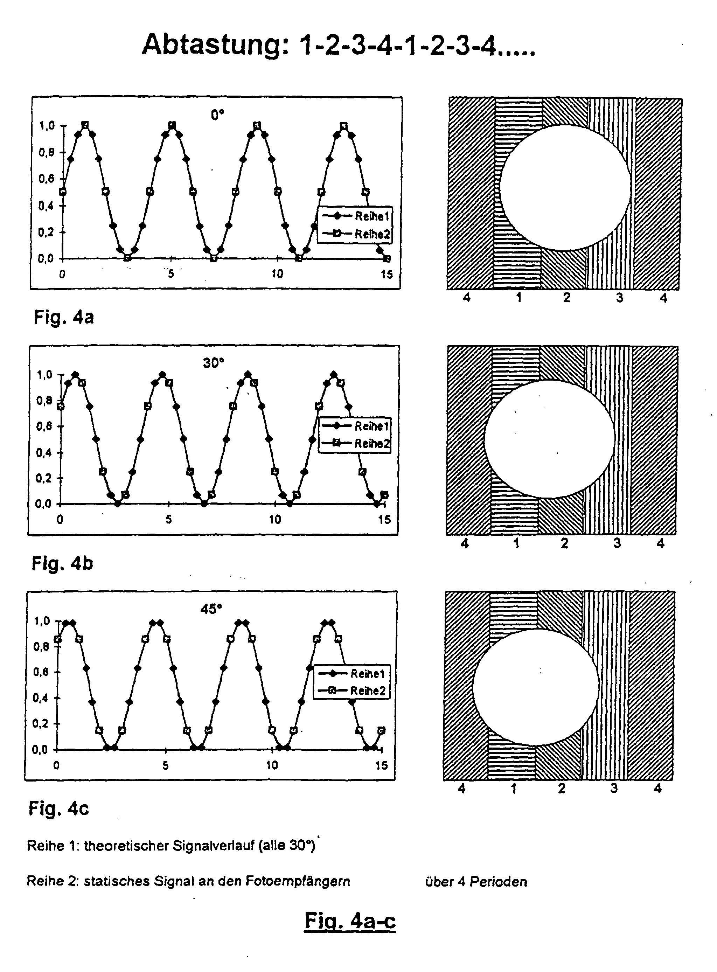

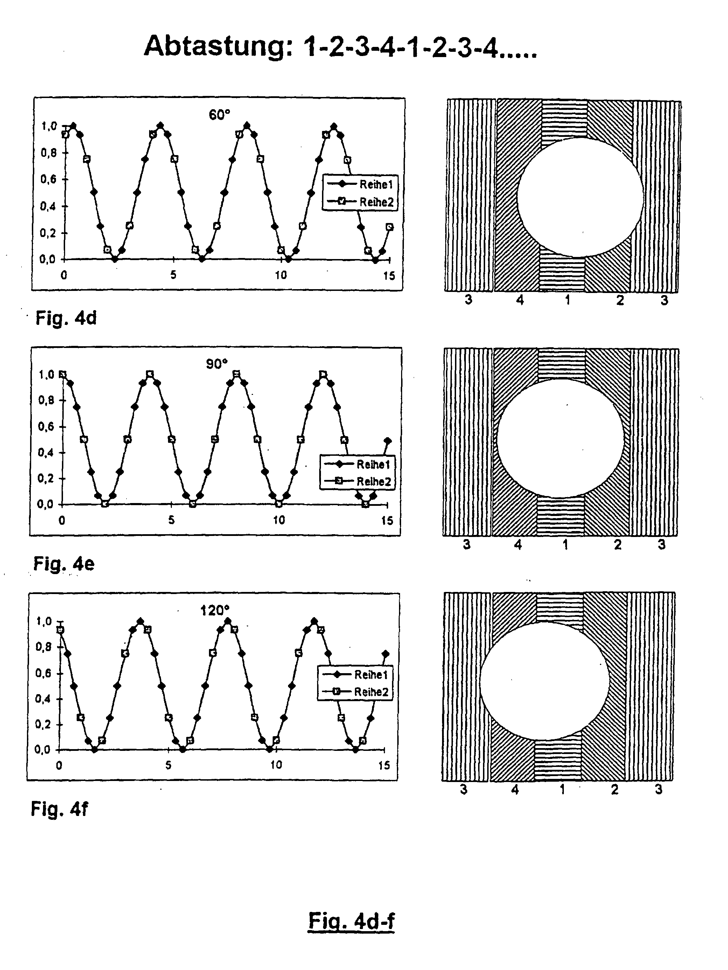

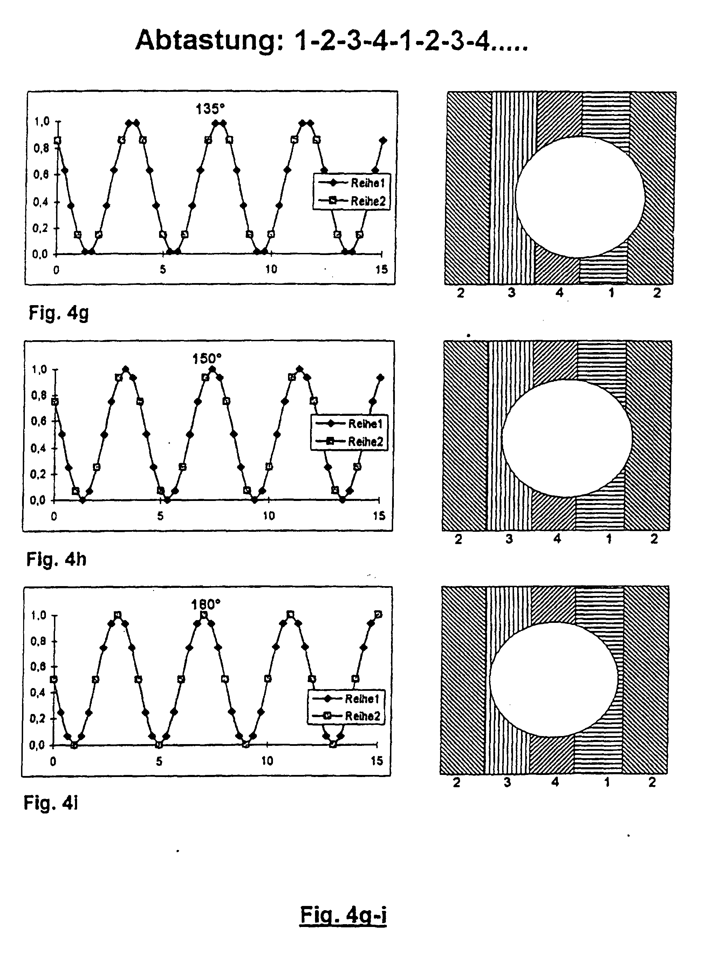

In Fig. 4 sind in der linken Bildhälfte die trägerfrequenz-modulierten Signale bei einem Abfragezyklus nach dem Muster 1 - 2 - 3 - 4 - 1 - 2 - 3 - 4 ... dargestellt. Die Amplitudenwerte sind auf 1 normiert, die Zeitachse zeigt willkürliche Einheiten. Eine erste Reihe aus auf der Spitze stehenden dunklen Quadraten entspricht einem nach der Theorie errechneten Signalverlauf, wobei die Stützwerte eine Abstand von jeweils 30° haben. Als hellere Quadrate sind eine zweite Reihe statischer Amplitudenwerte angegeben, die der Flächenüberdeckung der in der rechten Bildhälfte dargestellten Empfänger 1, 2, 3, 4 durch ein als Kreisscheibe dargestelltes Pupillenbild entsprechen. Die Werte stimmen ersichtlich mit dem theoretisch erwarteten Signalverlauf überein.

Die dargestellten Bildsequenzen simulieren zeitlich wechselnde Lichtflüsse im an sich feststehenden Pupillenbild, die durch eine örtliche Verschiebung der abgebildeten strukturierten Oberfläche auf dem Ortsfrequenzfilter hervorgerufen werden, durch eine entsprechende Relativverschiebung des Pupillenbildes gegenüber den Empfängern, die zu diesem Zweck als sich wiederholende Folge dargestellt sind. Es ist deutlich zu sehen, daß die Trägerfrequenz konstant ist, während sich die Phase des Sinussignals entsprechend der Verschiebung des Pupillenbildes verändert. Die jeweiligen Phasenverschiebungen gegenüber Fig. 4a sind in den Signal-Diagrammen in Winkelgraden angegeben.

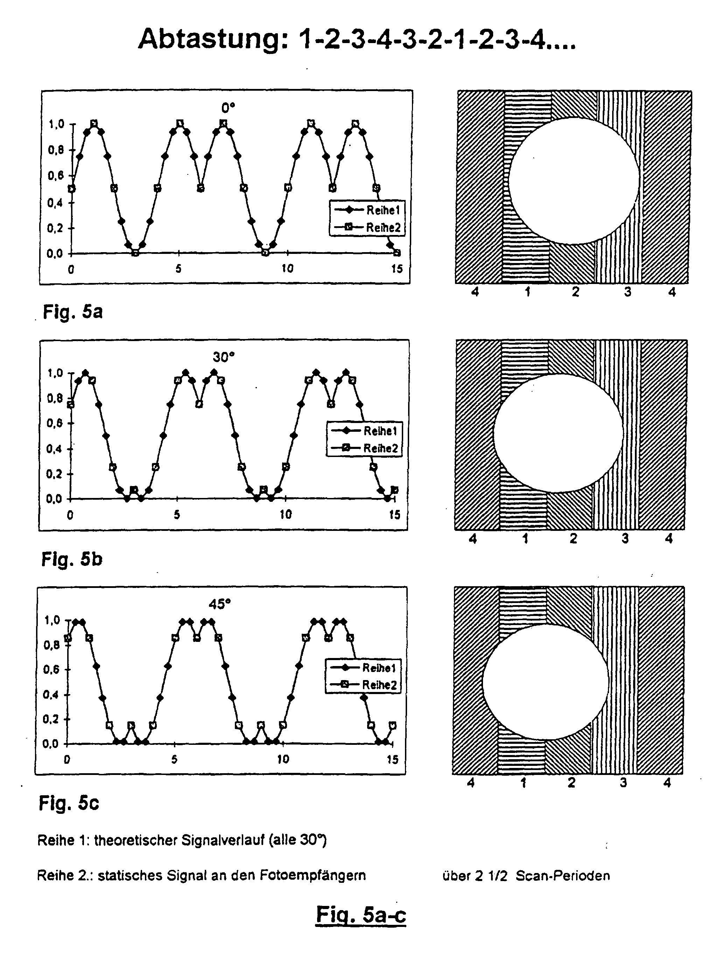

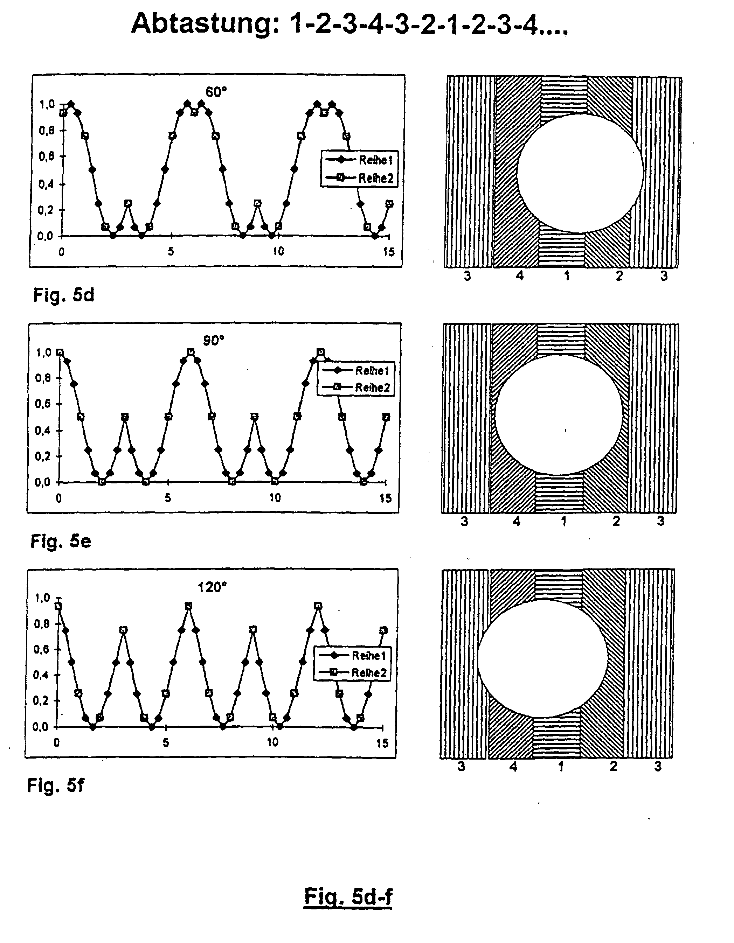

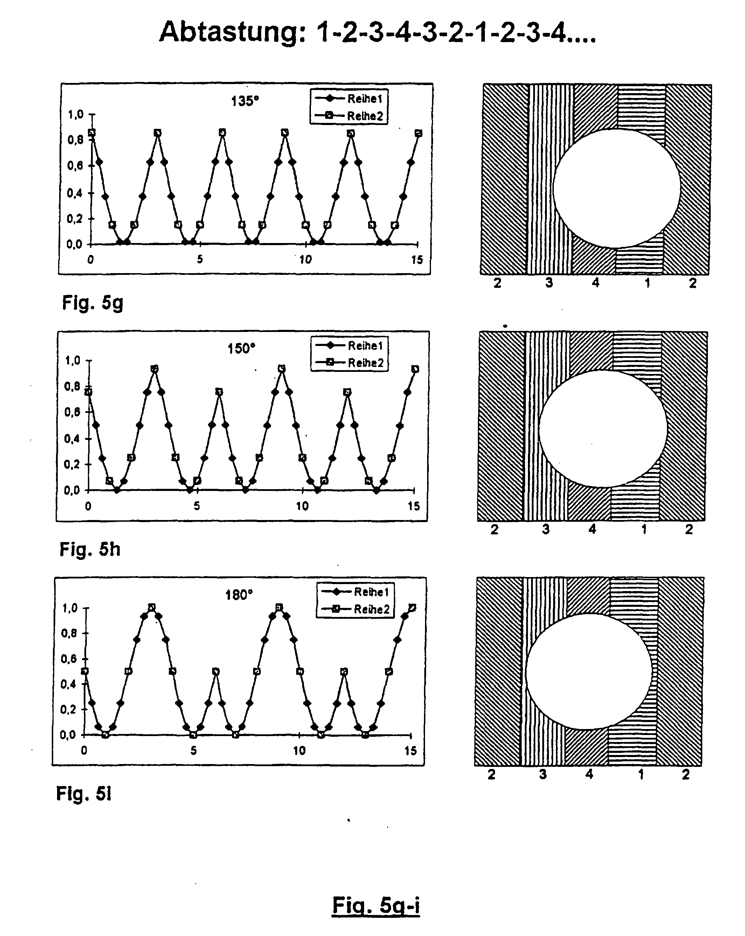

Fig. 5a-i zeigt eine gleiche Darstellung wie in Fig. 4a-i, jedoch jetzt für einen Abfragezyklus nach dem Muster 1 - 2 - 3 - 4 -3 - 2 - 1 - 2 - ... Deutlich zu sehen ist bei gleicher Taktrate die niedrigere Trägerfrequenz der Grundwelle und die überlagerte erste Oberwelle. Während die Oberwelle bei einer Phasenverschiebung des Pupillenbildes zwischen 45° und 60° nahezu verschwindet, dominiert sie bei einer Phasenverschiebung von 135° das Signal vollständig. Bei der Signalauswertung muß daher mit beiden Trägerfrequenzen phasenempfindlich gleichgerichtet werden.

## Patentansprüche

1. Verfahren zur Erzeugung eines trägerfrequenz-modulierten Signals für die Auswertung von n > 2 durch Abbildung einer strukturierten Oberfläche auf ein Ortsfrequenzfilter erzeugten, zueinander phasenverschobenen fotoelektrischen Meßsignalen , **dadurch gekennzeichnet, daß** die Amplituden der Meßsignale in einem vorgegebenen Abfragezyklus mit einer konstanten Taktrate seriell abgefragt werden und durch Filterung aus der Signalfolge ein sinusförmiges Signal gebildet wird, dessen Trägerfrequenz durch die Zeit für einen Abfragezyklus bestimmt ist.

2. Verfahren nach Anspruch 1, **dadurch gekennzeichnet, daß** die Taktrate größer als die doppelte Geschwindigkeit der Amplitudenänderung im abgefragten Meßsignal ist.

3. Verfahren nach Anspruch 1 oder 2, **dadurch gekennzeichnet, daß** bei n zueinander um je 360°/n phasenverschobenen Meßsignalen der Abfragezyklus nach dem Muster 1, 2, 3, ..., n, 1, 2, ...erfolgt.

4. Verfahren nach Anspruch 1 oder 2, **dadurch gekennzeichnet, daß** bei n zueinander um je 360°/n phasenverschobenen Meßsignalen der Abfragezyklus nach dem Muster 1, 2, 3, ... , n, n-1, ..., 2, 1, 2, ... erfolgt.

5. Verfahren nach einem der vorhergehenden Ansprüche, **dadurch gekennzeichnet, daß** parallel zum ersten Abfragezyklus ein zweiter, bei fortlaufender Numerierung 1, ..., n der Meßsignale um ein Meßsignal verschobener Abfragezyklus durchgeführt und aus dieser Signalfolge ein in der Phase um 360°/n verschobenes zweites Signal gebildet wird.

6. Verfahren nach einem der vorhergehenden Ansprüche, **dadurch gekennzeichnet, daß** getrennten Pupillenbereichen der Abbildung je n zueinander um 360°/n phasenverschobene Meßsignale zugeordnet, in einem Abfragezyklus parallel die den jeweiligen Pupillenbereichen zugeordneten Amplituden der Meßsignale abgefragt und aus den Signalfolgen für jeden Pupillenbereich ein Signal gebildet wird.

## Claims

1. Method for generating a carrier frequency-modulated signal for the evaluation of n > 2 photoelectric measurement signals which are generated by imaging a structured surface onto a spatial frequency filter and are phase-shifted with respect to one another, **characterized in that** the amplitudes of the measurement signals are serially interrogated in a predetermined interrogation cycle with a constant clock rate, and a sinusoidal signal is formed by filtering from the signal train, the carrier frequency of which signal is determined by the time for an interrogation cycle.

2. Method according to Claim 1, **characterized in that** the clock rate is greater than twice the speed of the amplitude change in the interrogated measurement signal.

3. Method according to Claim 1 or 2, **characterized in that**, given n measurement signals which are phase-shifted in each case by 360°/n with respect to one another, the interrogation cycle is effected according to the pattern 1, 2, 3, ..., n, 1, 2, ....

4. Method according to Claim 1 or 2, **characterized in that**, given n measurement signals which are phase-shifted in each case by 360°/n with respect to one another, the interrogation cycle is effected according to the pattern 1, 2, 3, ..., n, n-1, ..., 2, 1, 2, ....

5. Method according to one of the preceding claims, **characterized in that** a second interrogation cycle is carried out in parallel with the first interrogation cycle, which second interrogation cycle is shifted by one measurement signal given consecutive numbering 1, ..., n of the measurement signals, and a second signal, phase-shifted by 360°/n, is formed from this signal train.

6. Method according to one of the preceding claims, **characterized in that** separate pupil areas of the imaging are respectively assigned n measurement signals phase-shifted by 360°/n with respect to one another, the amplitudes, assigned to the respective pupil areas, of the measurement signals are interrogated in parallel in an interrogation cycle and a signal is formed from the signal trains for each pupil area.

## Revendications

1. Procédé pour générer un signal de fréquence porteuse modulé pour l'interprétation de n > 2 signaux de mesure photoélectriques mutuellement déphasés générés par l'image d'une surface structurée sur un filtre de fréquence local, **caractérisé en ce que** les amplitudes des signaux de mesure sont scrutées séquentiellement à un rythme d'horloge constant selon un cycle de scrutation défini et que le filtrage de la succession de signaux forme un signal sinusoïdal dont la fréquence de la porteuse est définie par le temps d'un cycle de scrutation.

2. Procédé selon la revendication 1, **caractérisé en ce que** le rythme d'horloge est supérieur au double de la vitesse de la variation d'amplitude du signal de mesure scruté.

3. Procédé selon la revendication 1 ou 2, **caractérisé en ce que** le cycle de scrutation se déroule selon le schéma 1, 2, 3, ..., n, 1, 2, ... dans le cas de n signaux de mesure mutuellement déphasés chacun de 360°.

4. Procédé selon la revendication 1 ou 2, **caractérisé en ce que** le cycle de scrutation se déroule selon le schéma 1, 2, 3, ..., n, n-1, ..., 2, 1, 2, ... dans le cas de n signaux de mesure mutuellement déphasés chacun de 360°.

5. Procédé selon une des revendications précédentes, **caractérisé en ce qu'**en parallèle avec le premier cycle de scrutation, on exécute un deuxième cycle de scrutation décalé d'un signal de mesure selon la numérotation successive 1, ..., n, des signaux de mesure et on génère un deuxième signal déphasé de 360°/n à partir de cette succession de signaux.

6. Procédé selon une des revendications précédentes, **caractérisé en ce qu'**on attribue n signaux de mesure mutuellement déphasés de 360°/n aux plages de pupilles distinctes de l'image, qu'on scrute les amplitudes des signaux de mesure attribuées à la plage de pupille correspondante dans un cycle de scrutation parallèle et qu'on forme un signal pour chaque plage de pupilles à partir des successions de signaux.
